# EUROPÄISCHE PATENTSCHRIFT

(11) **EP 3 241 650 B1**
(45) Veröffentlichungstag und Bekanntmachung des Hinweises auf die Patenterteilung: **16.09.2020**
(21) Anmeldenummer: 17164932.0
(22) Anmeldetag: 05.04.2017
(51) Int. Cl.: B23Q 17/00

(54) **LÖSEEINRICHTUNG FÜR EINEN WERKZEUG- ODER WERKSTÜCKSPANNER**
RELEASE DEVICE FOR A TOOL OR WORKPIECE CLAMPING DEVICE
DISPOSITIF DE DÉCLENCHEMENT POUR UN DISPOSITIF DE SERRAGE D'OUTIL OU DE PIÈCE USINÉE

(30) Priorität: 06.05.2016 DE 102016108407
(43) Veröffentlichungstag der Anmeldung: 08.11.2017
(73) Patentinhaber: Ott-Jakob Spanntechnik GmbH, 87663 Lengenwang (DE)
(72) Erfinder: Greif, Josef, 87496 Friesenried (DE); Bechteler, Wolfgang, 87640 Ebenhofen (DE); Gast, Stephan, 86987 Schwabsoien (DE); Merz, Florian, 87668 Rieden (DE); Neugebauer, Gerd, 87600 Kaufbeuren (DE)
(74) Vertreter: Charrier Rapp & Liebau

(56) Entgegenhaltungen:
- DE-A1- 19 954 634
- DE-U1-202006 015 944
- JP-A- 2013 212 550
- US-A1- 2006 239 788
- US-A1- 2010 124 468

## Beschreibung

Die Erfindung betrifft eine Löseeinrichtung für einen Werkzeug- oder Werkstückspanner nach dem Oberbegriff des Patentanspruchs 1. Die Erfindung betrifft außerdem einen Werkzeug- oder Werkstückspanner mit einer derartigen Löseeinrichtung.

Die Arbeitsspindeln von Werkzeugmaschinen oder Bearbeitungszentren weisen in der Regel einen integrierten Werkzeugspanner zum automatischen Spannen von Werkzeugen oder Werkzeugaufhahmen auf. Derartige Werkzeugspanner enthalten üblicherweise einen mittels einer Zugstange betätigbaren Spannsatz, der durch Verschiebung der Zugstange zwischen einer Spannstellung zur Halterung der Bearbeitungswerkzeuge oder Werkzeughalter und einer Lösestellung zur Freigabe der Bearbeitungswerkzeuge oder Werkzeughalter bewegbar ist. Der Spannsatz enthält z.B. mehrere radial bewegliche Zangenelemente, durch welche die Werkzeugaufhahmen oder Werkzeuge in eine Arbeitsspindel eingezogen werden. Üblicherweise wird der Spannsatz durch eine um die Zugstange angeordnete Federanordnung in die Spannstellung eingezogen. Zum Lösen der Werkzeugaufhahmen oder Werkzeuge wird der Spannsatz durch eine i.a. hydraulisch betätigte Löseeinrichtung über die Zugstange entgegen der Kraft der Federanordnung so verschoben, dass der Spannsatz mit den Zangenelementen geöffnet wird und die Werkzeugaufnahmen oder Werkzeuge freigibt.

Aus der DE 10 2008 058185 A1 ist eine gattungsgemäße Löseeinrichtung für einen Werkzeug- oder Werkstückspanner bekannt, bei dem die Position eines Kolbens, der innerhalb eines Gehäuses axial verschiebbar angeordnet ist und bei einer Verschiebung nach vorne die Zugstange ebenfalls axial verschiebt und dadurch den Spannsatz in Lösestellung versetzt, durch einen konstruktiv in die Werkzeugspannvorrichtung integrierten Sensor erfasst wird. Hierdurch kann eine fehlerhafte Werkzeugspannung infolge einer Fehlfunktion der hydraulischen Löseeinrichtung erkannt und eine Werkstückbearbeitung mit fehlerhaft gespanntem Werkzeug, die zu Ausschuss führen würde, vermieden werden.

Aufgabe der Erfindung ist es, die Zuverlässigkeit einer gattungsgemäßen Löseeinrichtung und eines Werkzeug- oder Werkstückspanners, der eine solche Löseeinrichtung enthält, hinsichtlich der Überwachung des Spannzustandes weiter zu verbessern.

Diese Aufgabe wird durch eine Löseeinrichtung mit den Merkmalen des Anspruchs 1 und durch einen Werkzeug- oder Werkstückspanner mit den Merkmalen des Anspruchs 14 gelöst. Zweckmäßige Weiterbildungen und vorteilhafte Ausgestaltungen der Erfindung sind in den Unteransprüchen angegeben.

Erfindungsgemäß sind bei einer gattungsgemäßen Löseeinrichtung mehrere die Funktion überwachende Sensoren, nämlich ein Kolbenabfragesensor zur Erfassung der Position des Kolbens relativ zum Gehäuse der Löseeinrichtung und ein Zugstangensensor zur Erfassung der Lage der Zugstange relativ zum Gehäuse, in dem Gehäuse der Löseeinrichtung angeordnet. Hierdurch wird die Zuverlässigkeit der sensorischen Überwachung des Spannzustandes des Werkzeug- oder Werkstückspanners entscheidend verbessert. Darüber hinaus kann aufgrund der Zusammenfassung der Sensoren in der Löseeinrichtung bei einem Defekt eines Sensors die Betriebsbereitschaft der Werkzeugmaschine durch einen Austausch der am hinteren Ende der Arbeitsspindel angeordneten Löseeinrichtung rasch widerhergestellt werden, ohne dass die gesamte Arbeitsspindel zerlegt werden muss.

Bevorzugt sind der Kolbenabfragesensor und der Zugstangensensor auf einem in dem Gehäuse angeordneten Trägerteil angeordnet. Damit sind diese Sensoren zu einer kompakten Baugruppe zusammengefasst, auf der auch ihre Zuleitungen verlegt werden können, und es erübrigt sich, an verschiedenen Orten in der Arbeitsspindel einer Werkzeugmaschine Raum für den Einbau der Sensoren vorzusehen. Ferner kann das Trägerteil mit dem Kolbenabfragesensor und dem Zugstangensensor als Baueinheit in der Löseeinrichtung montiert und aus dieser demontiert werden, wodurch sich die Montage der Arbeitsspindel und die Reparatur in Falle eines Defekts an einem Sensor vereinfacht.

Eine zweckmäßige Ausführung des Kolbenabfragesensors ist ein induktiver Näherungssensor, der auf dem Trägerteil so angeordnet ist, dass sich ein Abschnitt des Kolbens in derjenigen Endstellung des Kolbens, in welcher der Kolben die Zugstange nicht betätigt, im Messbereich des Kolbenabfragesensors befindet. Ein solcher Sensor arbeitet berührungslos und detektiert die besonders wichtige Lösestellung, die der Kolben einnehmen muss, bevor nach einem Werkzeug- bzw. Werkstückwechsel mit der Bearbeitung begonnen werden darf.

Eine besonders bevorzugte Ausführungsform des Kolbenabfragesensors ist ein induktiver Näherungssensor, der auf dem Trägerteil so angeordnet ist, dass er eine Empfindlichkeit in radialer Richtung bezüglich einer Längsachse der Löseeinrichtung hat, und dass der Kolbenabfragesensor in der Löseeinrichtung so angeordnet ist, dass sich ein an dem Kolben ausgebildeter radialer Absatz an dem Kolbenabfragesensor vorbei bewegt, wenn sich der Kolben aus derjenigen Endstellung, in welcher er die Zugstange nicht betätigt, herausbewegt. Hierdurch vereinfacht sich die Zusammenfassung des Kolbenabfragesensors mit dem Zugstangensensor auf dem gemeinsamen Trägerteil, indem der Kolbenabfragesensor nicht an einer Stirnseite des Hohlzylinders, in dem sich der Kolben bewegt, angeordnet zu werden braucht, sondern an einer Mantelfläche platziert werden kann.

Eine zweckmäßige Ausführung des Zugstangensensors ist ein induktiver Wegsensor mit mindestens zwei Spulen, der auf dem Trägerteil so angeordnet ist, dass seine Spulen im einsatzbereiten Einbauzustand der Löseeinrichtung einen Abschnitt der Zugstange umgeben. Die Messung der Zugstangenposition erfolgt dann ebenfalls berührungslos. Insbesondere kann der Zugstangensensorsensor ein Differentialtransformator oder eine Differentialdrossel sein, dessen bzw. deren Kern im einsatzbereiten Einbauzustand der Löseeinrichtung zumindest teilweise durch den von den Spulen umgebenen Abschnitt der Zugstange gebildet wird. Diese bewährten Arten von induktiven Wegsensoren eignen sich für den Einsatz in einer metallischen Umgebung und sind vergleichsweise unempfindlich gegen Kontamination. Zur Erzielung eines großen Messeffektes ist es von Vorteil, wenn der Kern zumindest teilweise durch einen auf die Zugstange aufschiebbaren und an dieser befestigbaren Ring gebildet wird, der eine von der Zugstange abweichende magnetische Permeabilität aufweist.

In dem Gehäuse ist bevorzugt auch ein Leckagesensor zur Detektion einer abnormal erhöhten Leckage von Kühlschmierflüssigkeit, die der Zugstange über eine in die Löseeinrichtung eingebaute Drehdurchführung zugeführt wird, angeordnet. Durch die Zusammenfassung von drei Sensoren in der Löseeinrichtung wird der Vorteil, dass die Löseeinrichtung bei einem Defekt eines Sensors als Baueinheit austauschbar ist, weiter verstärkt. Die Fehlerdiagose an der Sensorik und der Austausch eines defekten Sensors kann abseits der Werkzeugmaschine an der Löseeinrichtung allein durchgeführt werden.

Zweckmäßig ist der Leckagesensor in einer in einen Sammelkanal mündenden Radialbohrung des Gehäuses angeordnet. Als Ausführungsform des Leckagesensors eignet sich insbesondere ein kalorimetrischer Durchflusssensor.

Im Sinne der erfindungsgemäßen Zusatzfunktion der Löseeinrichtung als Sensorik-Plattform ist außer den Sensoren vorzugsweise auch eine elektronische Auswerteeinheit zur Auswertung der Signale der in der Löseeinrichtung angeordneten Sensoren in einer Ausnehmung in dem Gehäuse angeordnet. Auf diese Weise sind alle Komponenten der Sensorik in die Löseeinrichtung integriert und es kann eine genormte Schnittstelle zur Messdatenübertragung an die Steuerung der Werkzeugmaschine bereitgestellt werden.

Bevorzugt ist eine elektronische Auswerteeinheit zur Auswertung der Signale der in der Löseeinrichtung angeordneten Sensoren vorgesehen, die anhand von Vergleichen eines oder mehrerer Ausgangssignale des Zugstangensensors mit mehreren Schwellwerten binäre Signale ableitet, welche anzeigen, ob sich der Werkzeug- oder Werkstückspanner in einer Lösestellung, einer Spannstellung mit gespanntem Werkzeug oder Werkstück oder einer Spannstellung ohne Werkzeug oder Werkstück befindet. Für die Steuerung des Betriebs der Werkzeugmaschine ist die Unterscheidung dieser drei Zustände des Werkzeug- oder Werkstückspanners von besonderem Interesse.

Durch die Kombination eines Kolbenabfragesensors und eines Zugstangensensors ergibt sich die vorteilhafte Möglichkeit, dass die elektronische Auswerteeinheit, die zur Auswertung der Signale der in der Löseeinrichtung angeordneten Sensoren vorgesehen ist, die Signale des Kolbenabfragesensors und des Zugstangensensors auf Plausibilität prüft und bei unplausiblen Wertekombinationen der Signale ein Warnsignal ausgibt, welches anzeigt, dass mindestens einer der Sensoren defekt ist. Hierdurch kann die Zuverlässigkeit der erfindungsgemäßen Sensorik weiter erhöht werden.

Die Erfindung betrifft außerdem einen Werkzeug- oder Werkstückspanner mit einer axial verschiebbaren Zugstange, einem über die Zugstange zwischen einer Spannstellung und einer Lösestellung bewegbaren Spannsatz, einer der Zugstange zugeordneten Federanordnung zur Erzeugung der Spann- bzw. Einzugskraft des Spannsatzes und einer vorstehend beschriebenen Löseeinrichtung, durch welche der Spannsatz über die Zugstange entgegen der Kraft der Federanordnung in die Lösestellung bewegbar ist.

Weitere Besonderheiten und Vorzüge ergeben sich aus der folgenden Beschreibung eines bevorzugten Ausführungsbeispiels anhand der Zeichnung. Es zeigen:
- **Figur 1**: einen Werkzeugspanner mit einer Löseeinrichtung und einer Drehdurchführung in einem Längsschnitt;
- **Figur 2**: eine Löseeinrichtung in einer Perspektive;
- **Figur 3**: die Löseeinrichtung von Figur 2 in einem Längsschnitt;
- **Figur 4**: ein Trägerteil mit einem Zugstangensensor und einem Kolbenabfragesensor;
- **Figur 5**: einen Leckagesensor in einem Längsschnitt.

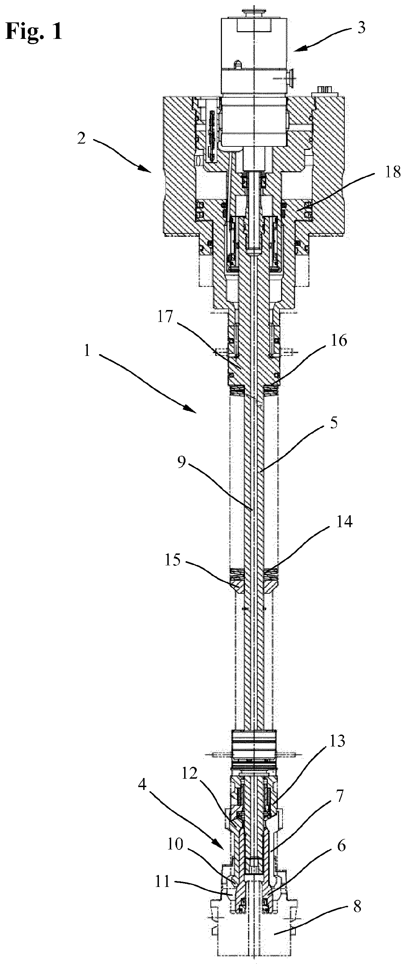

In Figur 1 ist ein für den Einbau in eine drehbare Arbeitsspindel einer Werkzeugmaschine konzipierter Werkzeugspanner 1 mit einer Löseeinrichtung 2 und einer sogenannten Drehdurchführung 3 für die Zuführung eines Kühlschmiermittels oder eines anderen Arbeitsfluids gezeigt. Der Werkzeugspanner 1 enthält einen Spannsatz 4, der über eine axial verschiebbare Zugstange 5 betätigbar ist. Bei der gezeigten Ausführung weist der Spannsatz 4 einen Spannkonus 6 und mehrere um den Spannkonus 6 angeordnete Zangenelemente 7 zur Halterung eines Werkzeugs oder einer Werkzeugaufhahme 8 auf.

Der Spannkonus 6 des Spannsatzes 4 ist an dem zur Werkzeugaufnahme 8 weisenden vorderen Ende der Zugstange 5 befestigt. Durch axiale Verschiebung des Spannkonus 6 über die Zugstange 5 sind die Zangenelemente 7 zur Klemmung bzw. Freigabe der Werkzeugaufhahme 8 radial bewegbar. Der hier in Art einer Spannzange ausgeführte Spannsatz 4 kann aber auch z.B. mit radial beweglichen Kugeln oder auf andere Weise ausgebildet sein. Die Zugstange 5 weist in der gezeigten Ausführung eine Durchgangsbohrung 9 für die Zuführung des über die Drehdurchführung 3 eingeleiteten Arbeits- und/oder Reinigungsfluids zur Werkzeugaufhahme 8 auf.

Die Zangenelemente 7 des Spannsatzes 4 greifen mit ihren äußeren Enden 10 in eine Ringnut 11 der Werkzeugaufhahme 8 ein. Mit ihren inneren Enden 12 sind die Zangenelemente 7 in einem hülsenförmigen Abstandshalter 13 geführt. Die Zugstange 5 wird durch eine um diese konzentrisch angeordnete Federanordnung 14 in eine zurückgezogene Spannstellung vorgespannt. Die bei der gezeigten Ausführung als Tellerfederpaket ausgebildete Federanordnung 14 ist an der einen Seite an einem innerhalb der Arbeitsspindel abgestützten buchsenförmigen Anlageelement 15 und an der anderen Seite an einer Ringfläche 16 eines verbreiterten hinteren Teils 17 der Zugstange 5 abgestützt.

An dem von der Werkzeugaufnahme 8 abgewandten hinteren Ende der Zugstange 5 ist die Löseeinrichtung 2 angeordnet. Diese enthält einen innerhalb eines Gehäuses verschiebbar geführten und über ein Druckfluid bewegbaren Kolben 18, über den die Zugstange 5 entgegen der Kraft der Federanordnung 14 in eine Lösestellung gedrückt werden kann. Wenn die Zugstange 5 bei der in Figur 1 gezeigten Lösestellung über den Kolben 18 der Löseinheit 2 durch entsprechende Zuführung eines Hydraulikfluids zur Löseeinrichtung 2 entgegen der Kraft der Federanordnung 14 in Richtung der Werkzeugaufhahme 8 geschoben wird, werden die Zangenelemente 7 radial nach innen verschoben und geben das Werkzeug bzw. die Werkzeugaufhahme 8 zur Entnahme aus der Arbeitsspindel frei. Wird dagegen der Kolben 18 durch entsprechende Ansteuerung der Löseeinrichtung 2 eingezogen, wird auch die Zugstange 5 durch die Kraft der Federanordnung 14 wieder eingezogen, wodurch die Zangenelemente 7 über den Spannkonus 6 radial nach außen gedrückt werden und das Werkzeug bzw. die Werkzeugaufhahme 8 in die Arbeitsspindel einziehen und spannen. Über die Drehdurchführung 3 kann Kühlschmiermittel oder ein anderes Arbeitsfluid in die während der Bearbeitung rotierende Zugstange 5 geleitet und über die Durchgangsbohrung 9 zu der Werkzeugaufhahme 8 geführt werden.

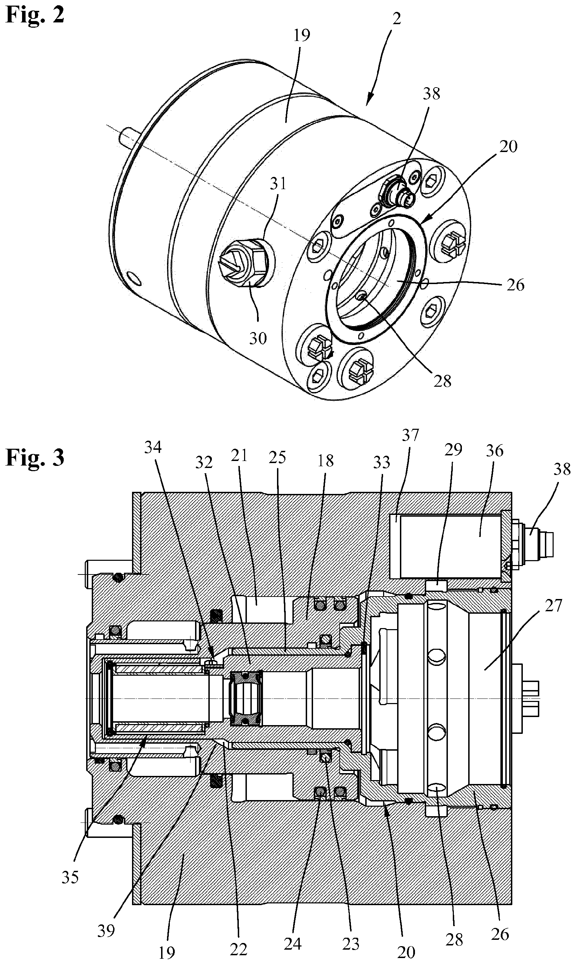

In den Figuren 2 und 3 ist eine erfindungsgemäße Löseeinrichtung 2 in einer Perspektive und einem Längsschnitt gezeigt. Die Löseeinrichtung 2 enthält ein hohlzylindrisches Gehäuse 19 und einen in das Gehäuse 19 eingeschraubten buchsenförmigen Einsatz 20, die einen nach außen abgedichteten Druckraum 21 zur Aufnahme des mit einer Durchgangsöffnung 22 versehenen Kolbens 18 begrenzen. In dem Druckraum 21 ist der über innere und äußere Dichtelemente 23 und 24 gegenüber dem Gehäuse 19 und dem Einsatz 20 abgedichtete Kolben 18 axial verschiebbar geführt und kann über entsprechende Zuführung eines Hydraulikfluids verschoben werden. Der Einsatz 20 weist einen in die Durchgangsöffnung 22 des Kolbens 18 ragenden schlankeren Teil 25 und einen erweiterten Teil 26 mit einer inneren Aufnahme 27 für die Drehdurchführung 3 auf.

Der hülsenförmige Einsatz 20 enthält im Bereich der Aufnahme 27 für die Drehdurchführung 3 mehrere über den Umfang verteilte radiale Durchgangsöffnungen 28, die in einen ringnutförmigen Sammelkanal 29 an der Innenseite des hohlzylindrischen Gehäuses 19 münden. Der Sammelkanal 29 dient als Sammelraum für ein an der Drehdurchführung 3 austretendes Leckagefluid und steht in Verbindung mit einem in Figur 1 gezeigten Leckagesensor 30, der in einer in den Sammelkanal 29 mündenden Radialbohrung 31 an der Außenseite des Gehäuses 19 eingeschraubt ist. In den schlankeren Teil 25 des Einsatzes 20 ist ein hülsenförmiges Trägerteil 32 für eine Sensorik eingesteckt und durch einen Sicherungsring 33 axial gesichert.

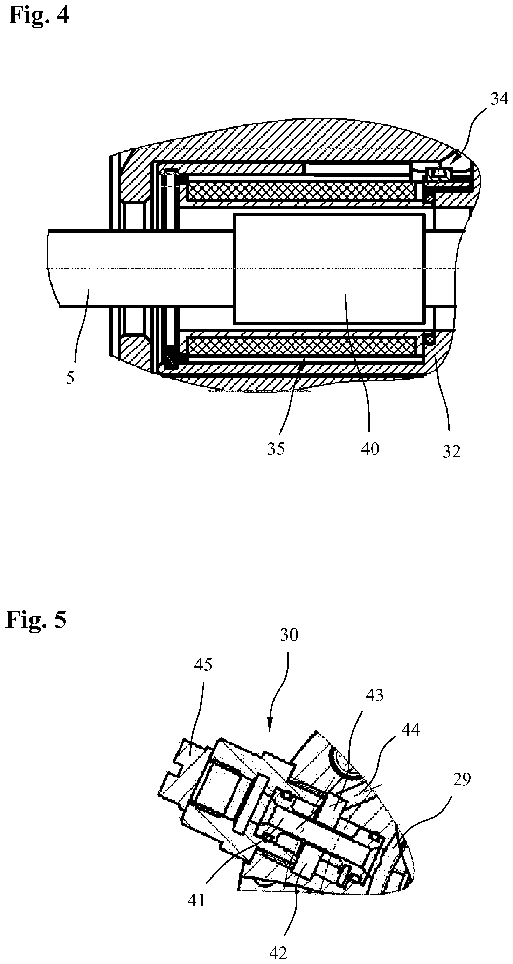

Auf dem in Figur 4 vergrößert dargestellten hülsenförmigen Trägerteil 32 sind ein Kolbenabfragesensor 34 zur Erfassung der Position des Kolbens 18 relativ zum Gehäuse 19 und ein Zugstangensensor 35 zur Erfassung der Lage der durch die Löseeinrichtung 2 betätigbaren Zugstange 5 relativ zum Gehäuse 19 angeordnet. Der Leckagesensor 30, der Kolbenabfragesensor 34 und der Zugstangensensor 35 sind mit einer in Figur 2 gezeigten und ebenfalls im Gehäuse 19 integrierten elektronischen Auswerteeinheit 36 verbunden. Die Auswerteeinheit 36 ist in einer entsprechenden Ausnehmung 37 des Gehäuses 19 angeordnet und weist eine elektronische Schnittstelle 38 zum Anschluss eines Steckers eines zu einer übergeordneten Steuereinheit der Werkzeugmaschine führenden Kabels auf.

Von den Sensoren 34 und 35 führen Zuleitungen durch einen Kanal in dem Trägerteil 32 axial nach hinten in Richtung der Drehdurchführung 3 und vom hinteren Ende des Trägerteils 32 in einer in dem hülsenförmigen Einsatz 20 ausgebildeten Nut radial nach außen und weiter nach hinten bis zur axialen Höhe der Ausnehmung 37 und dort über Bohrungen radial durch den hülsenförmigen Einsatz 20 und das Gehäuse 19 hindurch in die Ausnehmung 37. Das Trägerteil 32 fungiert also auch für einen wesentlichen Teil der Gesamtlänge der Zuleitungen der Sensoren 34 und 35 als Träger dieser Zuleitungen.

Bei dem Kolbenabfragesensor 34 handelt es sich vorzugsweise um einen Näherungssensor, der auf der Außenseite des Trägerteils 32 so angeordnet ist, dass seine Empfindlichkeit radial ausgerichtet ist, d.h. dass er auf die Annäherung eines Objektes in radialer Richtung anspricht. Zur Detektion der axialen Stellung des Kolbens 18 durch den Kolbenabfragesensor 34 weist der Kolben 18 auf seiner Innenseite einen radialen Absatz 39 auf und der Kolbenabfragesensor 34 ist an dem Trägerteil 32 axial so platziert, dass der Abstand der Innenseite des Kolbens 18 von dem Kolbenabfragesensor 34 in der in Fig. 3 gezeigten hinteren Endstellung des Kolbens 18 wesentlich geringer ist als in einer davon abweichenden Stellung. Wenn der Kolben 18 die hintere Endstellung verlässt, ergibt sich daher eine Änderung des von dem Kolbenabfragesensor 34 erzeugten Messsignals. Durch einen Schwellwertvergleich wird dieses Messsignal in der Auswerteeinheit 36 in ein binäres Signal umgewandelt, welches anzeigt, ob sich der Kolben 18 in seiner in Fig. 3 gezeigten hinteren Endstellung, welche der Spannstellung des Werkzeugspanners 1 entspricht, befindet oder nicht.

Der Kolbenabfragesensor 34 kann ein induktiver oder kapazitiver Näherungssensor sein, da sich diese Sensortypen besonders zur Detektion metallischer Objekte eignen und der Kolben 18, dessen Position detektiert werden soll, aus Stahl besteht. Induktive und kapazitive Näherungssensoren sind als solche bekannt, so dass ihre Funktionsweise hier keiner Erläuterung bedarf. Grundsätzlich kämen auch andere Arten berührungsloser Näherungssensoren wie optische oder Ultraschallsensoren in Betracht, doch erscheinen insbesondere induktive Näherungssensoren wegen des relativ geringen Abstandes der Innenoberfläche des Kolbens 18 von dem Trägerteil 32 als besonders geeignet. Gegenüber kapazitiven Näherungssensoren haben sie den Vorteil, unempfindlicher gegen eine Kontamination durch in einer Werkzeugmaschine verwendete Medien wie Kühlschmiermittel und Öl zu sein.

Falls außer der Spannstellung auch die Lösestellung eindeutig festgestellt werden sollte, so wäre dies grundsätzlich mittels eines zweiten Kolbenabfragesensors möglich, der an dem Trägerteil 32 axial so weit vorne, d.h. in den Figuren 3 und 4 so weit links neben dem dort eingezeichneten Kolbenabfragesensor 34 anzuordnen wäre, dass der axiale Abschnitt des Kolbens 18 mit größerem Innendurchmesser erst kurz vor Erreichen der vorderen, d.h. in Fig. 3 linken Endstellung des Kolbens 18 in den Empfindlichkeitsbereich eines solchen zweiten Kolbenabfragesensors gelangen würde. In erster Linie ist jedoch nur die in Fig. 3 gezeigte Spannstellung des Kolbens 18 von Interesse, da eine Werkstückbearbeitung erst begonnen werden darf, wenn sich der Kolben 18 definitiv in der Spannstellung befindet.

Bei dem Zugstangensensor 35 handelt es sich vorzugsweise um einen induktiven Wegsensor mit mehreren Spulen, deren gemeinsamen Kern ein Abschnitt der Zugstange 5 bildet. Wie aus

Fig. 3 ersichtlich ist, reicht der Kolben 18 nahezu bis zum vorderen Ende des Gehäuses 19 der Löseeinrichtung 2. Dort hat der Kolben 18 eine kreisringförmige Anlagefläche, mit welcher er zum Lösen der Spannvorrichtung 1 gegen eine ebenfalls kreisringförmigen Kontaktfläche der Zugstange 5 drückt. Der sich in den Zugstangensensor 35 hinein erstreckende Abschnitt der Zugstange 5 ist also ein Fortsatz, der sich von der Kontaktfläche der Zugstange 5 aus nach hinten erstreckt und im vorgesehenen Einbauzustand aller Komponenten bis zu der Drehdurchführung 3, an der Kühlschmiermittel in die Zugstange 5 eingeleitet wird, in die Löseeinrichtung 2 hineinragt.

Durch die lineare Verschiebung der Zugstange 5 zwischen der Spannstellung und der Lösestellung ändern sich die Induktivitäten der Spulen, wenn die Zugstange im Bereich der Spulen eine Inhomogenität des Querschnitts und/oder der magnetischen Permeabilität aufweist. Insbesondere kann ein Differentialtransformator (LVDT) mit einer Primärspule und zwei zu selbiger koaxial und nebeneinander angeordneten Sekundärspulen oder eine Differentialdrossel mit zwei koaxial nebeneinander angeordneten Spulen verwendet werden. Differentialtransformatoren und Differentialdrosseln sind als solche bekannt, so dass ihre Funktionsweise hier keiner näheren Erläuterung bedarf.

Eine Inhomogenität des Querschnitts der Zugstange 5 kann in einfacher Weise durch Aufschieben eines Ringes 40 auf die Zugstange 5 und Befestigung desselben an einer geeigneten axialen Position der Zugstange 5 erreicht werden. Auf diese Weise kann zugleich auch eine Inhomogenität der wirksamen Permeabilität des für den induktiven Wegsensor als gemeinsamer Kern seiner Spulen fungierenden Abschnitts der Zugstange 5 erreicht werden. So kann für den Ring 40 insbesondere ein ferromagnetisches Material mit wesentlich höherer Permeabilität als diejenige der Zugstange 5 oder ein paramagnetisches Material wie z. B. Aluminium mit wesentlich geringerer Permeabilität als diejenige der Zugstange 5 vorgesehen werden. Beides sorgt für einen ausgeprägten Messeffekt bei einer axialen Verschiebung der Zugstange 5.

Auch die ursprünglich analogen Ausgangssignale des Zugstangensensors 35 können in der Auswerteeinheit 36 in einfacher Weise durch Schwellwertvergleiche in binäre Ausgangssignale umgewandelt werden. Wenn die axialen Positionen der Spulen und des auf der Zugstange 5 angebrachten Ringes 40 so aufeinander abgestimmt sind, dass der Ring 40 genau dann symmetrisch zu den Spulen des Zugstangensensors 35 liegt, wenn sich letztere in der Mitte zwischen ihren beiden Endstellungen befindet, dann kann mittels eines solchen Zugstangensensors 35 sowohl das Erreichen beider Endstellungen der Zugstange 5, als auch deren Lage in einem vorbestimmten Bereich zwischen diesen Endstellungen eindeutig festgestellt werden. So ist beispielsweise bei einem Differentialtransformator bekanntlich in der Differenz der Sekundärspannungen anhand deren Amplitude der Betrag des Weges messbar und anhand deren Phase ist die Richtung der Bewegung feststellbar.

Ein Werkzeugspanner 1 der zugrundeliegenden Art ist dann in Lösestellung, wenn sich die Zugstange 5 in ihrer vorderen Endstellung befindet. Er ist in Spannstellung mit einem gespannten Werkzeug, wenn sich die Zugstange 5 in einem vorbestimmten Bereich zwischen ihren beiden Endstellungen befindet. Er ist in Spannstellung ohne Werkzeug oder Werkstück, wenn sich die Zugstange 5 in ihrer hinteren Endstellung befindet. Diese drei Zustände müssen anhand der Messung mittels des Zugstangensensors 35 voneinander unterscheidbar sein.

Zur Erkennung der Spannstellung mit Werkzeug kann eine Kalibrierung mittels zweier Kalibrierkörper vorgenommen werden, deren Abmessungen die beiden zulässigen Grenzwerte der Form eines Werkzeughalters 8 repräsentieren, bei denen sich die Zugstange 5 in der Spannstellung an einer vorderen bzw. hinteren Grenze ihrer zulässigen axialen Position befindet. Bei der Kalibrierung werden die jeweiligen Ausgangssignale des Zugstangensensors 35 beim Spannen der beiden Kalibrierkörper als Schwellwerte abgespeichert, mit denen das Ausgangssignal im späteren Betrieb verglichen wird. Eine Überschreitung bzw. Unterschreitung eines dieser Schwellwerte, die eine axiale Position der Zugstange 5 außerhalb der Spannstellung mit einem gespannten Werkzeug anzeigt, wird dann von der Auswerteeinheit 36 je nach Richtung der Abweichung aus dem durch die Schwellwerte begrenzten Bereich entweder als Lösestellung oder als Spannstellung ohne Werkzeug interpretiert.

Durch die gemeinsame Auswertung der Ausgangssignale des Kolbenabfragesensors 34 und des Zugstangensensors 35 kann die Zuverlässigkeit der Überwachung des Spannzustandes des Werkzeugspanners 1 nicht nur insofern erhöht werden, als die Fehlersituation in Gestalt des Nichterreichens der Spannstellung durch die Zugstange 5 trotz Erreichens der Spannstellung durch den Kolben 18 erkannt werden kann, sondern es können auch Defekte an den beiden Sensoren 34 und 35 erkannt werden, indem die Kombination ihrer Signale auf Plausibilität überwacht wird. So ist es beispielsweise ein Indiz für einen Defekt an mindestens einem der beiden Sensoren 34 oder 35, wenn der Kolbenabfragesensor 34 anzeigt, dass sich der Kolben 18 nicht in seiner hinteren Endstellung befindet, während der Zugstangensensor 35 anzeigt, das sich die Zugstange 5 in ihrer hinteren Endstellung befindet. Bei Erkennung einer unplausiblen Signalkombination wie der genannten gibt die Auswerteeinheit 36 ein entsprechendes Warnsignal an die Steuerung der Werkzeugmaschine ab.

Der in Fig. 5 in einer Längsschnittansicht im eingebauten Zustand gezeigte Leckagesensor 30 besteht aus einem radial angeordneten Rohr 41, welches von dem Ringkanal 29 zur Außenoberfläche der Löseeinrichtung 2 führt und aus zwei Widerständen 42 und 43, die einander radial gegenüberliegend in die Wandung des Rohres 41 eingebaut sind. In einen dieser Widerstände 42 oder 43 wird elektrische Leistung eingespeist und mit beiden Widerständen 42 und 43 die Temperatur gemessen. Die durch die eingespeiste Leistung verursachte Temperaturdifferenz zwischen den Orten der beiden Widerstände 42 und 43 hängt von der Wärmeableitung durch die Strömung der Leckageflüssigkeit in dem Rohr 41 ab und ist somit eine Funktion des Durchsatzes der Leckageflüssigkeit. Diese Funktionsweise eines Durchflusssensors ist als kalorimetrisches Messprinzip bekannt und bedarf daher hier keiner näheren Erläuterung. Als temperaturempfindliche Messwiderstände 42 und 43 eignen sich beispielsweise Platinwiderstände.

Die mit den Widerständen 42 und 43 gemessene Temperaturdifferenz wird mit einem vorbestimmten Schwellwert verglichen. Auf diese Weise wird auch für den Leckagefluss ein binäres Signal erzeugt, welches anzeigt, ob sich der Leckagefluss in einem zulässigen Bereich bewegt oder abnormal erhöht ist. Dieser Schwellwertvergleich erfolgt in der Auswerteeinheit 36, wozu von den Widerständen 42 und 43 aus ein Kanal 44 zu der Ausnehmung 37 des Gehäuses 19 führt, in welcher die Auswerteeinheit 36 angeordnet ist. Der Leckagesensor 30 ist in Fig. 5 außen durch einen eingeschraubten Blindstopfen 45 verschlossen. Anstelle dieses Blindstopfens 45 ist im Betrieb ein Schlauch angeschlossen, durch den die Leckageflüssigkeit zu einem Reservoir abgeleitet wird.

## Patentansprüche

1. Löseeinrichtung (2) eines Werkzeug- oder Werkstückspanners (1) mit einem Gehäuse (19) und einem innerhalb des Gehäuses (19) axial verschiebbaren Kolben (18) zur Betätigung einer Zugstange (5), **dadurch gekennzeichnet, dass** in dem Gehäuse (19) ein Kolbenabfragesensor (34) zur Erfassung der Position des Kolbens (18) relativ zum Gehäuse (19) und ein Zugstangensensor (35) zur Erfassung der Lage der Zugstange (5) relativ zum Gehäuse (18) angeordnet sind.

2. Löseeinrichtung (2) nach Anspruch 1, **dadurch gekennzeichnet, dass** der Kolbenabfragesensor (34) und der Zugstangensensor (35) auf einem in dem Gehäuse (19) angeordneten Trägerteil (32) angeordnet sind.

3. Löseeinrichtung (2) nach Anspruch 1 oder 2, **dadurch gekennzeichnet, dass** der Kolbenabfragesensor (34) ein induktiver Näherungssensor ist, der auf dem Trägerteil (32) so angeordnet ist, dass sich ein Abschnitt des Kolbens (18) in derjenigen Endstellung des Kolbens (18), in welcher der Kolben (18) die Zugstange (5) nicht betätigt, im Messbereich des Kolbenabfragesensors (34) befindet.

4. Löseeinrichtung (2) nach einem der Ansprüche 1 bis 3, **dadurch gekennzeichnet, dass** der Kolbenabfragesensor (34) ein induktiver Näherungssensor ist, der auf dem Trägerteil (32) so angeordnet ist, dass er eine Empfindlichkeit in radialer Richtung bezüglich einer Längsachse der Löseeinrichtung (2) hat, und dass der Kolbenabfragesensor (34) in der Löseeinrichtung so angeordnet ist, dass sich ein an dem Kolben (18) ausgebildeter radialer Absatz (39) an dem Kolbenabfragesensor (34) vorbei bewegt, wenn sich der Kolben (18) aus derjenigen Endstellung, in welcher er die Zugstange (5) nicht betätigt, herausbewegt.

5. Löseeinrichtung (2) nach einem der Ansprüche 1 bis 4, **dadurch gekennzeichnet, dass** der Zugstangensensor (35) ein induktiver Wegsensor mit mindestens zwei Spulen ist, der auf dem Trägerteil (32) so angeordnet ist, dass seine Spulen im einsatzbereiten Einbauzustand der Löseeinrichtung (2) einen Abschnitt der Zugstange (5) umgeben.

6. Löseeinrichtung (2) nach Anspruch 5, **dadurch gekennzeichnet, dass** der Zugstangensensorsensor (35) ein Differentialtransformator oder eine Differentialdrossel ist, dessen bzw. deren Kern im einsatzbereiten Einbauzustand der Löseeinrichtung (2) zumindest teilweise durch den von den Spulen umgebenen Abschnitt der Zugstange (5) gebildet wird.

7. Löseeinrichtung (2) nach Anspruch 6, **dadurch gekennzeichnet, dass** der Kern zumindest teilweise durch einen auf die Zugstange (5) aufschiebbaren und an dieser befestigbaren Ring (40) gebildet wird, der eine von der Zugstange (5) abweichende magnetische Permeabilität aufweist.

8. Löseeinrichtung (2) nach einem der Ansprüche 1 bis 7, **dadurch gekennzeichnet, dass** in dem Gehäuse (19) ein Leckagesensor (30) angeordnet ist.

9. Löseeinrichtung (2) nach Anspruch 8, **dadurch gekennzeichnet, dass** der Leckagesensor (30) in einer in einen Sammelkanal (29) mündenden Radialbohrung (31) des Gehäuses (19) angeordnet ist.

10. Löseeinrichtung (2) nach Anspruch 8 oder 9, **dadurch gekennzeichnet, dass** der Leckagesensor (30) ein kalorimetrischer Durchflusssensor ist.

11. Löseeinrichtung (2) nach einem der Ansprüche 1 bis 10, **dadurch gekennzeichnet, dass** eine elektronische Auswerteeinheit (36) zur Auswertung der Signale der in der Löseeinrichtung angeordneten Sensoren in einer Ausnehmung (37) in dem Gehäuse (19) angeordnet ist.

12. Löseeinrichtung (2) nach einem der Ansprüche 1 bis 11, **dadurch gekennzeichnet, dass** eine elektronische Auswerteeinheit (36) zur Auswertung der Signale der in der Löseeinrichtung (2) angeordneten Sensoren vorgesehen ist, die anhand von Vergleichen eines oder mehrerer Ausgangssignale des Zugstangensensors (35) mit mehreren Schwellwerten binäre Signale ableitet, welche anzeigen, ob sich der Werkzeug- oder Werkstückspanner (1) in einer Lösestellung, einer Spannstellung mit gespanntem Werkzeug oder Werkstück oder einer Spannstellung ohne Werkzeug oder Werkstück befindet.

13. Löseeinrichtung (2) nach einem der Ansprüche 1 bis 12, **dadurch gekennzeichnet, dass** eine elektronische Auswerteeinheit (36) zur Auswertung der Signale der in der Löseeinrichtung (2) angeordneten Sensoren vorgesehen ist, die Signale des Kolbenabfragesensors (34) und des Zugstangensensors (35) auf Plausibilität prüft und bei unplausiblen Wertekombinationen der Signale ein Warnsignal ausgibt, welches anzeigt, dass mindestens einer der Sensoren (34, 35) defekt ist.

14. Werkzeug- oder Werkstückspanner mit einer axial verschiebbaren Zugstange (5), einem über die Zugstange (5) zwischen einer Spannstellung und einer Lösestellung bewegbaren Spannsatz (4), einer der Zugstange (5) zugeordneten Federanordnung (14) zur Erzeugung der Spann- bzw. Einzugskraft des Spannsatzes (4) und einer Löseeinrichtung (2), durch welche der Spannsatz (4) über die Zugstange (5) entgegen der Kraft der Federanordnung (14) in die Lösestellung bewegbar ist, **dadurch gekennzeichnet, dass** die Löseeinrichtung (2) nach einem der Ansprüche 1 bis 13 ausgebildet ist.

## Claims

1. Release device (2) of a tool clamp or workpiece clamp (1) with a housing (19) and a piston (18) which is axially displaceable within the housing (19) for actuating a draw rod (5), **characterised in that** a piston scanning sensor (34) for detecting the position of the piston (18) relative to the housing (19) and a draw rod sensor (35) for detecting the position of the draw rod (5) relative to the housing (19) are arranged in the housing (19).

2. Release device (2) according to claim 1, **characterised in that** the piston scanning sensor (34) and the draw rod sensor (35) are arranged on a support part (32) arranged in the housing (19).

3. Release device (2) according to claim 1 or 2, **characterised in that** the piston scanning sensor (34) is an inductive proximity sensor which is arranged on the support part (32) so that a section of the piston (18) is located **in that** end position of the piston (18), in which the piston (18) does not actuate the draw rod (5), in the measuring region of the piston scanning sensor (34).

4. Release device (2) according to one of claims 1 to 3, **characterised in that** the piston scanning sensor (34) is an inductive proximity sensor which is arranged on the support part (32) so that it has a sensitivity in radial direction with respect to a longitudinal axis of the release device (2), and **in that** the piston scanning sensor (34) is arranged in the release device so that a radial shoulder (39) formed on the piston (18) is moved past the piston scanning sensor (34) if the piston (18) is moved out of that end position in which it does not actuate the draw rod (5).

5. Release device (2) according to one of claims 1 to 4, **characterised in that** the draw rod sensor (35) is an inductive path sensor with at least two coils, which is arranged on the support part (32) so that its coils surround a section of the draw rod (5) in the ready-for-use installation state of the release device (2).

6. Release device (2) according to claim 5, **characterised in that** the draw rod sensor (35) is a differential transformer or a differential reactor, the core of which is formed at least partly by the section of the draw rod (5) surrounded by the coils in the ready-for-use installation state of the release device (2).

7. Release device (2) according to claim 6, **characterised in that** the core is formed at least partly by a ring (40) which can be pushed onto the draw rod (5) and can be attached to the latter and has a magnetic permeability differing from the draw rod (5).

8. Release device (2) according to one of claims 1 to 7, **characterised in that** a leakage sensor (30) is arranged in the housing (19).

9. Release device (2) according to claim 8, **characterised in that** the leakage sensor (30) is arranged in a radial bore (31) of the housing (19) leading into a collection channel (29).

10. Release device (2) according to claim 8 or 9, **characterised in that** the leakage sensor (30) is a calorimetric flow sensor.

11. Release device (2) according to one of claims 1 to 10, **characterised in that** an electronic evaluating unit (36) for evaluating the signals of the sensors arranged in the release device is arranged in a recess (37) in the housing (19).

12. Release device (2) according to one of claims 1 to 11, **characterised in that** an electronic evaluating unit (36) for evaluating the signals of the sensors arranged in the release device (2) is provided which derives binary signals, which indicate whether the tool clamp or workpiece clamp (1) is located in a release position, a clamping position with clamped tool or workpiece or a clamping position without tool or workpiece, using comparison of one or more output signals of the draw rod sensor (35) with several threshold values.

13. Release device (2) according to one of claims 1 to 12, **characterised in that** an electronic evaluating unit (36) for evaluating the signals of the sensors arranged in the release device (2) is provided which checks signals of the piston scanning sensor (34) and of the draw rod sensor (35) for plausibility and in the case of implausible value combinations of the signals, emits an alarm signal which indicates that at least one of the sensors (34, 35) is faulty.

14. Tool clamp or workpiece clamp with an axially displaceable draw rod (5), a clamping unit (4) which can be moved via the draw rod (5) between a clamping position and a release position, a spring arrangement (14) assigned to the draw rod (5) to generate the clamping force or draw-in force of the clamping unit (4) and a release device (2), by means of which the clamping unit (4) can be moved into the release position via the draw rod (5) counter to the force of the spring arrangement (14), **characterised in that** the release device (2) is designed according to one of claims 1 to 13.

## Revendications

1. Dispositif de desserrage (2) d'un système de serrage d'outil ou de pièce (1) avec un boîtier (19) et un piston (18) pouvant être coulissé de manière axiale à l'intérieur du boîtier (19) pour actionner une tige de traction (5), **caractérisé en ce que** sont disposés dans le boîtier (19) un capteur d'interrogation de piston (34) pour détecter la position du piston (18) par rapport au boîtier (19) et un capteur de tige de traction (35) pour détecter la position de la tige de traction (5) par rapport au boîtier (18).

2. Dispositif de desserrage (2) selon la revendication 1, **caractérisé en ce que** le capteur d'interrogation de piston (34) et le capteur de tige de traction (35) sont disposés sur une partie de support (32) disposée dans le boîtier (19).

3. Dispositif de desserrage (2) selon la revendication 1 ou 2, **caractérisé en ce que** le capteur d'interrogation de piston (34) est un capteur de proximité inductif, qui est disposé sur la partie de support (32) de telle sorte qu'une section du piston (18) se trouve dans la zone de mesure du capteur d'interrogation de piston (34) dans la position finale du piston (18), dans laquelle précisément le piston (18) n'actionne pas la tige de traction (5).

4. Dispositif de desserrage (2) selon l'une quelconque des revendications 1 à 3, **caractérisé en ce que** le capteur d'interrogation de piston (34) est un capteur de proximité inductif, qui est disposé sur la partie de support (32) de telle sorte qu'il a une sensibilité dans la direction radiale par rapport à un axe longitudinal du dispositif de desserrage (2), et que le capteur d'interrogation de piston (34) est disposé dans le dispositif de desserrage de telle sorte qu'un retrait (39) radial réalisé au niveau du piston (18) se déplace le long du capteur d'interrogation de piston (34) quand le piston (18) se déplace hors de la position finale, dans laquelle précisément il n'actionne pas la tige de traction (5).

5. Dispositif de desserrage (2) selon l'une quelconque des revendications 1 à 4, **caractérisé en ce que** le capteur de tige de traction (35) est un capteur de déplacement inductif avec au moins deux bobines, qui est disposé de telle sorte sur la partie de support (32) que ses bobines entourent dans l'état de montage prêt à l'emploi du dispositif de desserrage (2) une section de la tige de traction (5).

6. Dispositif de desserrage (2) selon la revendication 5, **caractérisé en ce que** le capteur de tige de traction (35) est un transformateur différentiel ou un étrangleur différentiel, dont la partie centrale est formée, dans l'état de montage prêt à l'emploi du dispositif de desserrage (2), au moins en partie par la section, entourée par les bobines, de la tige de traction (5).

7. Dispositif de desserrage (2) selon la revendication 6, **caractérisé en ce que** la partie centrale et formée au moins en partie par une bague (40) pouvant être enfilée sur la tige de traction (5) et pouvant être fixée au niveau de celle-ci, qui présente une perméabilité magnétique divergeant de la tige de traction (5).

8. Dispositif de desserrage (2) selon l'une quelconque des revendications 1 à 7, **caractérisé en ce qu'**un capteur de fuite (30) est disposé dans le boîtier (19).

9. Dispositif de desserrage (2) selon la revendication 8, **caractérisé en ce que** le capteur de fuite (30) est disposé dans un alésage radial (31), débouchant dans un canal de collecte (29), du boîtier (19).

10. Dispositif de desserrage (2) selon la revendication 8 ou 9, **caractérisé en ce que** le capteur de fuite (30) est un capteur de débit calorimétrique.

11. Dispositif de desserrage (2) selon l'une quelconque des revendications 1 à 10, **caractérisé en ce qu'**une unité d'évaluation (36) électronique pour évaluer les signaux des capteurs disposés dans le dispositif de desserrage est disposée dans un évidement (37) dans le boîtier (19).

12. Dispositif de desserrage (2) selon l'une quelconque des revendications 1 à 11, **caractérisé en ce qu'**une unité d'évaluation (36) électronique pour évaluer les signaux des capteurs disposés dans le dispositif de desserrage (2) est prévue, laquelle déduit à l'aide de la comparaison d'un ou de plusieurs signaux de sortie du capteur de tige de traction (35) à plusieurs valeurs de seuil des signaux binaires, lesquels indiquent si le système de serrage d'outil ou de pièce (1) se trouve dans une position de desserrage, dans une position de serrage avec un outil ou une pièce serré(e) ou une position de serrage sans outil ou pièce.

13. Dispositif de desserrage (2) selon l'une quelconque des revendications 1 à 12, **caractérisé en ce qu'**une unité d'évaluation (36) électronique pour évaluer les signaux des capteurs disposés dans le dispositif de desserrage (2) est prévue, laquelle contrôle la plausibilité de signaux du capteur d'interrogation de piston (34) et du capteur de tige de traction (35) et émet en cas de combinaisons de valeurs non plausibles des signaux un signal d'alerte, lequel indique qu'au moins un des capteurs (34, 35) est défectueux.

14. Système de serrage d'outil ou de pièce avec une tige de traction (5) pouvant être coulissée axialement, un jeu de serrage (4) pouvant être déplacé par l'intermédiaire de la tige de traction (5) entre une position de serrage et une position de desserrage, un ensemble de ressort (14) associé à la tige de traction (5), pour générer la force de serrage ou la force d'introduction par traction du jeu de serrage (4) et un dispositif de desserrage (2), par lequel le jeu de serrage (4) peut être déplacé dans la position de desserrage à l'encontre de la force de l'ensemble de ressort (14) par l'intermédiaire de la tige de traction (5), **caractérisé en ce que** le dispositif de desserrage (2) est réalisé selon l'une quelconque des revendications 1 à 13.
